# EUROPÄISCHE PATENTSCHRIFT

(11) **EP 1 392 569 B1**
(45) Veröffentlichungstag und Bekanntmachung des Hinweises auf die Patenterteilung: **29.03.2006**
(21) Anmeldenummer: 02748661.2
(22) Anmeldetag: 17.04.2002
(51) Int. Cl.: B65D 5/00, B65D 51/00

(54) **VERSCHLUSS FÜR EINE MEDIKAMENTENFLASCHE SOWIE VERFAHREN ZU DESSEN HERSTELLUNG**
CLOSURE FOR A MEDICAMENT BOTTLE AND METHOD FOR THE PRODUCTION THEREOF
SYSTEME DE BOUCHAGE POUR FLACON DE MEDICAMENTS ET PROCEDE PERMETTANT DE LE PRODUIRE

(30) Priorität: 07.06.2001 DE 10127823
(43) Veröffentlichungstag der Anmeldung: 03.03.2004
(73) Patentinhaber: West Pharmaceutical Services Deutschland GmbH & Co. KG, 52249 Eschweiler (DE)
(72) Erfinder: BECKER, Bernd, 52074 Aachen (DE)
(74) Vertreter: Maucher, Wolfgang
(86) Internationale Anmeldenummer: PCT/EP2002/004233
(87) Internationale Veröffentlichungsnummer: WO 2002/098748

(56) Entgegenhaltungen:
- EP-A- 0 364 783
- EP-A- 0 503 330
- EP-A- 0 614 820
- EP-A- 0 721 896
- US-A- 3 888 377
- US-A- 5 467 878

## Beschreibung

Die Erfindung betrifft ein Verfahren zur Herstellung eines ein Kappenteil mit wenigstens einer durch eine durchstechbare Dichtschicht verschlossenen und durch ein Abdeckelement abgedeckten Kappen-Öffnung aufweisenden Verschlusses für eine Medikamentenflasche, wobei das wenigstens eine Abdeckelement und das Kappenteil hergestellt und miteinander verbunden werden, und wobei danach in das Kappenteil die elastische Dichtschicht eingespritzt wird. Außerdem betrifft die Erfindung einen Verschluß für eine Medikamentenflasche, der ein mit der Flasche verbindbares Kappenteil aufweist, das wenigstens eine Öffnung hat, die durch eine elastische, durchstechbare Dichtschicht verschlossen ist, und wobei die Öffnung außenseitig durch ein Abdeckelement abgedeckt ist, daß mit dem Öffnungsrand dicht und lösbar verbunden ist.

Aus DE 38 35 720 C2 kennt man bereits einen solchen Verschluß, der ein topfförmiges Kappenteil aufweist, daß an seiner in Gebrauchsstellung die Öffnung der Medikamentenflasche überdeckenden Wandung eine Öffnung hat, die durch eine durchstechbare Dichtschicht verschlossen ist. An der Außenseite des Kappenteils ist als Abdeckelement eine abziehbare Folie angeordnet, welche den an der Öffnung befindlichen Durchstechbereich der Dichtschicht überdeckt. An ihrem um die Öffnung umlaufenden Randbereich ist die Abdeckfolie mit dem Öffnungsrand des Kappenteils fest, jedoch lösbar verbunden. Der Durchstechbereich der Dichtschicht ist dadurch gegen das Eindringen von Keimen und gegen Verschmutzung geschützt.

In der Regel wird der Inhalt einer solchen Medikamentenflasche mit Hilfe einer Hohlnadel oder einer Kanüle entnommen, wobei die Hohlnadel oder die Kanüle durch die Dichtschicht hindurchgestochen wird. Dazu muß zunächst die Abdeckfolie auf- bzw. abgerissen werden, damit der durchstechbare Teil der Dichtschicht freigelegt wird.

Bei der Herstellung der Verschlußkappe wird zunächst in ein Formwerkzeug für das Kappenteil die Abdeckfolie eingelegt und danach wird zur Formung des Kappenteils heißes Kunststoffmaterial in das Formwerkzeug eingespritzt. Das Abdeckelement verbindet sich dann mit dem Kappenteil fest, jedoch lösbar. Dabei ist es jedoch schwierig, die Abzugs- bzw. Haltekräfte für die Abdeckfolie so einzustellen, daß diese zwar auf einfache Weise von dem Kappenteil abgezogen werden kann, aber dennoch ausreichend fest mit dem Kappenteil verbunden ist, so daß sie sich nicht bereits beim Transport oder bei der Handhabung des Medikamentenbehälters ablösen kann. Sind die Abzugskräfte zu groß, kann die an dem Abdeckelement vorgesehene Griff-Flasche beim Abziehen der Abdeckfolie abreißen, so daß dann der Flascheninhalt nicht entnommen werden kann. Sind die Abzugskräfte dagegen zu klein, ist die biologische Sicherheit nicht mehr gewährleistet und der durchstechbare Teil der Dichtschicht kann verschmutzen oder mit Bakterien, Keimen oder dergleichen in Berührung geraten, wenn sich die Abdeckfolie von dem Kappenteil ablöst.

Es besteht deshalb die Aufgabe, einen Verschluß der eingangs genannten Art zu schaffen, der eine hohe biologische Sicherheit aufweist und eine einfache und sichere Handhabung ermöglicht. Außerdem besteht die Aufgabe, ein Verfahren der eingangs genannten Art anzugeben, daß eine einfache Herstellung eines solchen Verschlusses ermöglicht.

Die Lösung dieser Aufgabe besteht bezüglich des Verfahrens darin, daß zuerst das Kappenteil hergestellt wird, daß danach bei der Herstellung des wenigstens einen Abdeckelements der die Kappen-Öffnung umgrenzende Randbereich des Kappenteils mit dem Werkstoff des Abdeckelements umspritzt wird, zur Bildung einer formschlüssigen Verbindung zwischen dem Abdeckelement und dem Kappenteil, und daß die Werkstoffe des Abdeckelements, des Kappenteils und der Dichtschicht so gewählt werden, daß der Werkstoff des Abdeckelements weder mit dem Werkstoff des Kappenteils noch mit dem Werkstoff der Dichtschicht eine materialschlüssige Verbindung eingeht.

In vorteilhafter Weise ergibt sich durch das Umspritzen des Kappenteils mit dem Werkstoff des Abdeckelements eine formschlüssige Verbindung zwischen dem Kappenteil und dem Abdeckelement, die den Verbindungsbereich zuverlässig abdichtet. Da eine materialschlüssige Verbindung oder ein Verschweißen des Abdeckelements mit dem Kappenteil und/oder der Dichtschicht vermieden wird, läßt sich das Abdeckelement zum Freilegen des durchstechbaren Teils der Dichtschicht mit einer definierten Abzugskraft von dem Kappenteil abziehen. Da nach der Herstellung des Abdeckelements und des Kappenteils die elastische Dichtschicht in das mit dem Abdeckelement verbundene Kappenteil eingespritzt wird, wird die der Dichtschicht zugewandte Rückseite des Abdeckelements durch den beim Umspritzen noch heißen Abdeckelement-Werkstoff sterilisiert. Dabei gerät dieser Werkstoff unmittelbar mit der Rückseite des Abdeckelements in Berührung, wodurch sich eine flächige, über den gesamten Querschnitt der Öffnung erstreckende, leicht lösbare Verbindung zwischen dem Abdeckelement und der Dichtschicht ergibt. Ein Zwischenraum zwischen dem Abdeckelement und der Dichtschicht, in dem Keime, Bakterien, Viren oder dergleichen überleben könnten, wird vermieden.

Die vorstehend genannte Aufgabe wird bezüglich eines Verfahrens der eingangs genannten Art, bei dem zuerst das wenigstens eine Abdeckelement und danach das Kappenteil hergestellt wird, auch dadurch gelöst, daß zur Bildung einer formschlüssigen Verbindung zwischen dem Abdeckelement und dem Kappenteil bei der Herstellung des Kappenteils der Randbereich des Abdeckelements mit dem Kappenwerkstoff umspritzt wird, und daß die Werkstoffe des Abdeckelements, des Kappenteils und der Dichtschicht so gewählt werden, daß der Werkstoff des Abdeckelements weder mit dem Werkstoff des Kappenteils noch mit dem Werkstoff der Dichtschicht eine materialschlüssige Verbindung eingeht.

Auch bei dieser Lösung wird eine zuverlässig abdichtende formschlüssige Verbindung zwischen dem Kappenteil und dem Abdeckelement erreichbar, bei der sich das Abdeckelement zum Freilegen des sterilen, durchstechbaren Teils der Dichtschicht mit einer definierten Abzugskraft von dem Kappenteil abziehen läßt.

Vorteilhaft ist, wenn die Dichtschicht beim Einspritzen in das Kappenteil mit diesem verschweißt wird. Die Dichtschicht ist dann kappeninnenseitig dicht mit dem Kappenteil verbunden, wobei auch kleinste Zwischenräume zwischen der Dichtschicht und dem Kappenteil vermieden werden. Somit wird eine noch bessere biologische Zuverlässigkeit des Verschlusses erreicht.

Die Lösung der vorstehend genannten Aufgabe besteht bezüglich des Verschlusses darin, daß das Abdeckelement mit seinem um die Öffnung umlaufenden Randbereich formschlüssig und materialschlußfrei mit dem Öffnungsrand der Kappen-Öffnung verbunden ist, und daß die Dichtschicht die der Öffnung zugewandte Rückseite des Abdeckelements flächig, materialschlußfrei und steril berührt.

Das Abdeckelement ist also entlang seines um die Öffnung umlaufenden Randbereichs formschlüssig und materialschlußfrei mit dem Öffnungsrand der Kappenöffnung verbunden, wodurch einerseits eine zuverlässige Abdichtung zwischen dem Abdeckelement und dem Kappenteil und somit eine hohe biologische Sicherheit des Verschlusses erreicht wird. Andererseits ist aber auch die zum Öffnen oder Abtrennen des Abdeckelements von dem Kappenteil zwischen diesem und dem Abdeckelement aufzubringende Abzugskraft exakt definiert, was ein einfaches abziehen des Abdeckelements von dem Kappenteil ermöglicht. Dabei wird diese Abzugskraft einerseits durch die Form und die Abmessungen der formschlüssig miteinander verbundenen Bereiche des Abdeckelements und des Kappenteils und andererseits aber auch durch die Werkstoffe der Abdeckelements und des Kappenteils bestimmt. Bei der Entwicklung oder Erstellung des Verschlusses kann die Abzugskraft durch entsprechende Dimensionierung dieser Abmessungen und/oder durch Auswahl entsprechender Werkstoffe eingestellt werden.

Vorteilhaft ist, wenn der Öffnungsrand des Kappenteils eine vorzugsweise an einer umlaufenden Nut des Abdeckelements gebildete Hinterscheidung des Kappenteils hintergreift. Dadurch wird einerseits eine gute Abdichtung zwischen dem Abdeckelement und dem Kappenteil erreicht. Andererseits wird das Abdeckelement beim Abziehen von dem Kappenteil im Bereich der Hinterscheidung aber auch bleibend verformt, so daß es nach dem Abtrennen von dem Kappenteil nicht mehr auf die Hinterscheidung aufsteckbar und mit dieser verbindbar ist. Das Abdeckelement erfüllt dann gleichzeitig auch die Funktion eines Originalitätsverschlusses.

Bei einer anderen vorteilhaften Ausführungsform der Erfindung ist das Abdeckelement als Abdeckkappe ausgebildet, die mit ihrem Randbereich wenigstens eine vorzugsweise an einer um die Kappenteil-Öffnung umlaufenden Nut gebildete Hinterscheidung des Kappenteils hintergreift. Auch bei dieser Lösung wird das Abdeckelement beim Abziehen von dem Kappenteil im Bereich der Hinterscheidung bleibend verformt. Auch hier ergibt sich eine gute Abdichtung zwischen dem Abdichtelement und dem Kappenteil.

Das wenigstens eine Abdeckelement kann aus einem duroplastischen und die Dichtschicht aus einem thermoplastischen Werkstoff bestehen. Dadurch kann bei der Herstellung des Verschlusses auf einfache Weise eine materialschlußfreie Verbindung zwischen dem Kappenteil und dem Abdeckelement erreicht werden.

Bei einer anderen vorteilhaften Ausführungsform der Erfindung ist vorgesehen daß das wenigstens eine Abdeckelement und die Dichtschicht aus unterschiedlichen, nicht miteinander verschweißbaren thermoplastischen Werkstoffen bestehen. Die Abdeckkappe kann dann zum Beispiel aus Polyamid, Polyacetat und die Dichtschicht aus Polyethylen oder Polypropylen bestehen.

Bei einer Ausführungsform der Erfindung ist die Dichtschicht kappeninnenseitig flächig mit dem Kappenteil verschweißt. Dadurch wird eine besonders dichte und feste Verbindung zwischen der Dichtschicht und dem Kappenteil erreicht.

Besonders vorteilhaft ist, wenn das Kappenteil wenigstens eine Grifflasche aufweist, deren Erstreckungsebene quer und insbesondere rechtwinklig zu der durch die Öffnung aufgespannten Ebene angeordnet ist, vorzugsweise mittig zur Öffnung des Kappenteils. Das Abdeckelement ist dann zum Abziehen von dem Kappenteil bequem an der Grifflasche ergreifbar.

Nachfolgend sind Ausführungsbeispiele der Erfindung anhand der Zeichnung näher erläutert. Es zeigen:
- Fig. 1: ein teilweise im Schnitt dargestelltes Kappenteil eines Verschlusses für eine Medikamentflasche, wobei Öffnungen des Kappenteils mit Abdeckelementen dicht verschlossen sind,
- Fig. 2: den fertig hergestellten Verschluß nach dem Einspritzen einer Dichtschicht in das in Fig. 1 gezeigte Kappenteil, wobei der Verschluß teilweise im Schnitt dargestellt ist,
- Fig. 3: einen vergrößerten Teilausschnitt aus Fig. 2, in dem die formschlüssige Verbindung zwischen dem Abdeckelement und dem Kappenteil besonders gut erkennbar ist,
- Fig. 4: eine Darstellung eines Verschlusses ähnlich Fig. 2, wobei jedoch die Öffnungsränder des Kappenteils in Nuten des Abdeckelements formschlüssig eingreifen, und
- Fig. 5: einen vergrößerten Teilausschnitt aus Fig. 4, in dem die formschlüssige Verbindung zwischen dem Abdeckelement und dem Kappenteil besonders gut erkennbar ist.

Ein im ganzen mit 1 bezeichneter Verschluß für eine Medikamentenflasche oder dergleichen Behälter weist ein mit dem Behälter verbindbares Kappenteil 2, daß an seinem in Gebrauchsstellung die Behälteröffnung überdeckenden Wandungsbereich zwei etwa kreisrunde Öffnungen 3 hat, die durch eine elastische, mit einer Hohlnadel durchstechbare Dichtschicht verschlossen sind. Die Öffnungen sind an der Außenseite des Kappenteils 2 jeweils durch ein Abdeckelement 5 abgedeckt, daß mit seinem durch die Öffnung 3 umlaufenden Randbereich 6 formschlüssig und lösbar mit dem die Öffnung 3 umgrenzenden Randbereich der Kappen-Öffnung 3 verbunden ist. An den Verbindungsstellen zwischen dem Kappenteil 2 und dem Abdeckelement 5 liegen die Werkstoffe von Kappenteil 2 und Abdeckelement 5 getrennt voneinander vor, daß heißt es ist keine materialschlüssige Verbindung zwischen diesen Werkstoffen vorhanden, An seinem freien Rand weist das Kappenteil 2 eine in der Zeichnung nicht näher dargestellte Dichtung auf, die in Gebrauchsstellung dichtend an den Behälter anliegt.

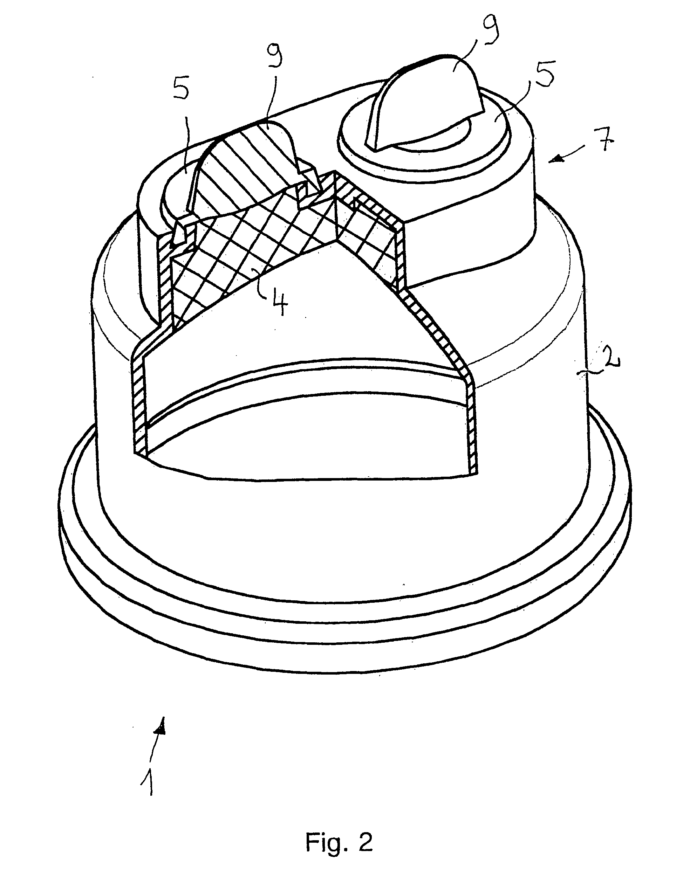

In Fig. 2 bis 5 ist erkennbar, daß die Dichtschicht in der Innenhöhlung des Kappenteils 2 angeordnet ist und die der Innenhöhlung zugewandte Rückseite des Abdeckelements 5 materialschlußfrei berührt. Dabei liegt die Dichtschicht über den gesamten Querschnitt der Öffnungen 3 flächig und steril an dem Abdeckelement 5 an. An den Stellen, an denen die Dichtschicht 4 das Kappenteil 2 berührt, ist sie mit dem Kappenteil 2 verschweißt, so daß sich über den gesamten Umfang des Kappenteils 2 zwischen diesem und der Dichtschicht 4 eine feste und dichte Verbindung ergibt.

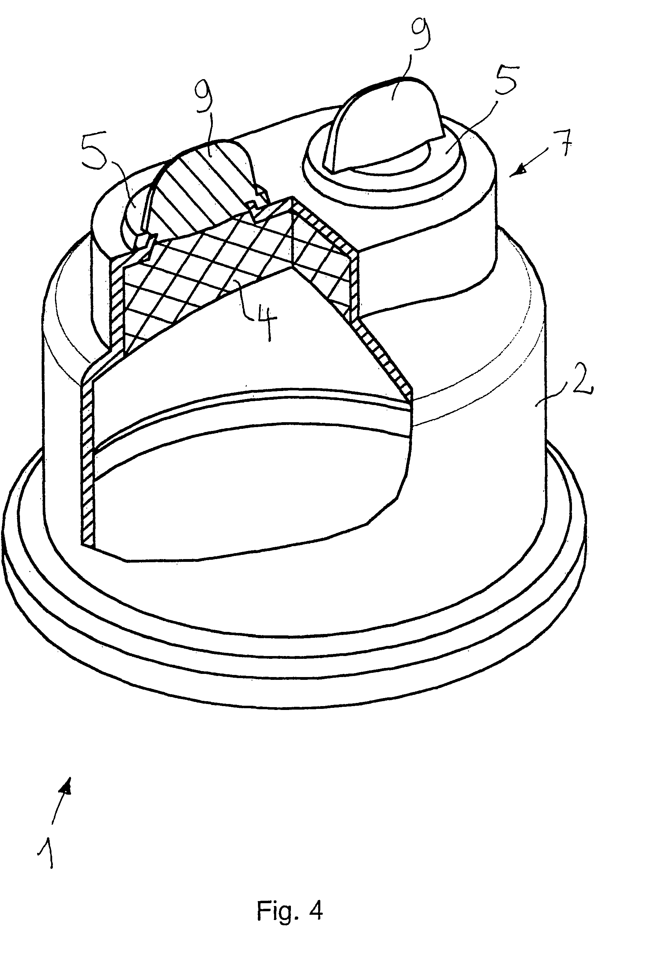

Das Kappenteil 2 weist einen etwa topfförmigen Grundkörper auf, der an seinem in Gebrauchsstellung die Behälteröffnung überdeckenden Wandungsbereich eine die Innenhöhlung des Grundkörpers erweiternde Ausformung 7 hat, die an der Außenseite dieses Wandungsbereichs einen Vorsprung oder eine Stufe bildet. In den Fig. 2 und 4 ist erkennbar, daß an der am weitesten vorstehenden Wandung dieser Ausformung 7 die Öffnungen 3 vorgesehen sind und daß die Dichtschicht 4 in der Innenhöhlung der Ausformung 7 angeordnet ist.

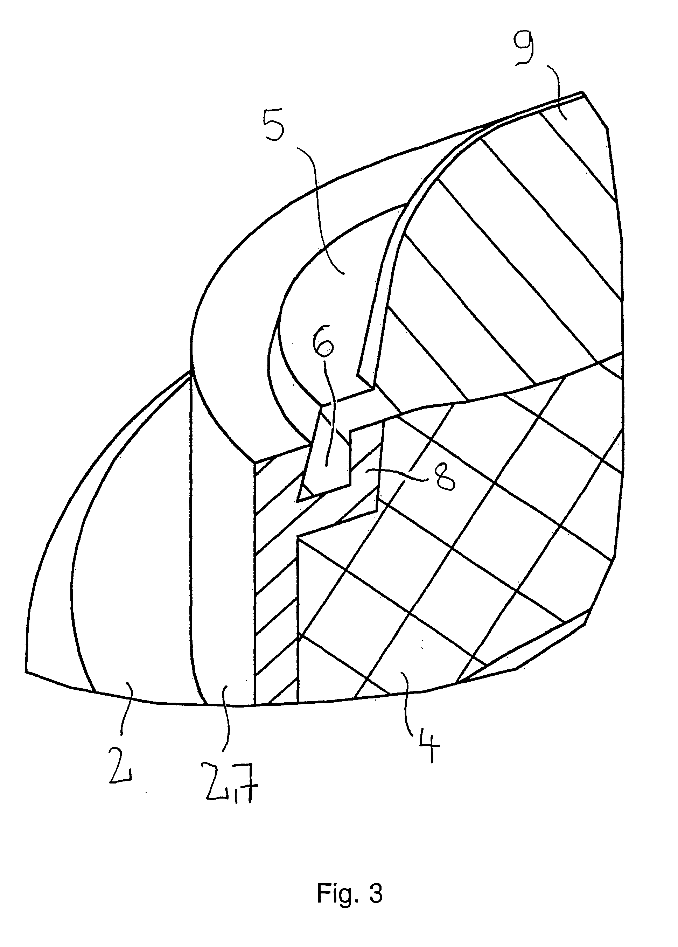

Bei dem Ausführungsbeispiel nach Fig. 2 und 3 ist der Öffnungsrand 8 des Kappenteils 2 von einer um die Öffnungen 3 umlaufenden Ringnut umgrenzt, die in die Außenseite des Kappenteils 2 eingelassen ist. Der Querschnitt der Ringnut erweitert sich, ausgehend von dem dazu benachbarten außenseitigen Oberflächenbereich des Kappenteils 2 zur tiefsten Stelle der Ringnut hin. In Fig. 3 ist erkennbar, daß dies dadurch erreicht wird, daß zumindest eine seitliche Begrenzungswand der Ringnut eine Hinterscheidung aufweist. Die Abdeckelemente 5 sind jeweils kappenförmig ausgebildet und greifen mit ihrem Kappenrand in die Ringnut ein, wo sie die Hinterscheidung hintergreifen. In Fig. 3 ist erkennbar, daß der Rand des Abdeckelements 5 die Ringnut des Kappenteils 2 vollständig ausfüllt. Die Abdeckelemente 5 bestehen aus einem Werkstoff, der weicher ist als derjenige des Kappenteils 2 und sich beim Abziehen eines Abdeckelements 5 von dem Kappenteil zumindest an seinem in die dem Abdeckelement 5 zugeordnete Ringnut eingreifenden Randbereich irreversibel verformt, so daß dieser nach dem Abziehen von dem Kappenteil 2 nicht mehr in die Ringnut eingesetzt werden kann.

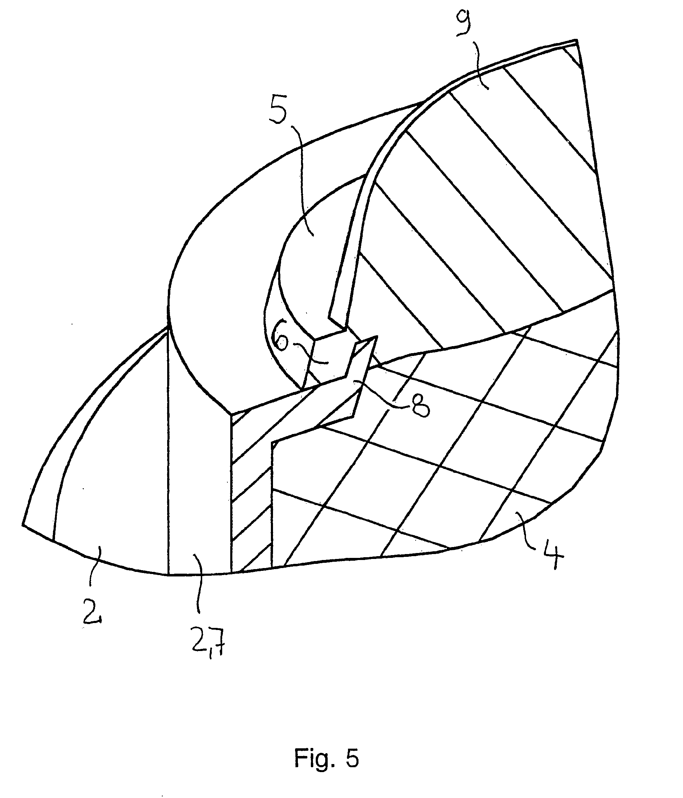

Die Fig. 4 und 5 zeigen ein weiteres Ausführungsbeispiel, bei dem die Abdeckelemente 5 an ihrer in Gebrauchsstellung dem Kappenteil zugewandten Rückseite eine um die ihnen zugeordnete Öffnung 3 des Kappenteils 2 umlaufende Ringnut aufweisen. In diese Ringnut greift ein an dem Öffnungsrand 8 des Kappenteils 2 vorgesehener kragenförmiger, um die Öffnung 3 umlaufender Überstand ein. In Fig. 4 ist erkennbar, daß die Seitenwände der Ringnut in einer die Längsmittelachse des Kappenteils enthaltenden Durchmesserebene schräg zu dieser Längsmittelachse verlaufen, so daß sie Hinterscheidungen bilden, welche der Öffnungsrand 8 des Kappenteils 2 hintergreift. In Fig. 5 ist erkennbar, daß der Öffnungsrand 8 des Kappenteils 2 die Ringnut des Abdeckelements 5 vollständig ausfüllt.

An die Abdeckelemente 5 ist jeweils eine Grifflasche 9 einstückig angeformt, die mit ihrer Erstreckungsebene etwa rechtwinklig zur Erstreckungsebene des Abdeckelements 5 angeordnet ist. In Fig. 2 und 4 ist erkennbar, daß die Grifflasche 9 etwa T-förmig mit dem Abdeckelement 5 verbunden ist. Dabei verläuft die Erstreckungsebene der Grifflasche etwa in einer die Längsmittelachse der Öffnung 3 enthaltenden Durchmesserebene der Öffnung 3.

Bei der Herstellung des in Fig. 2 gezeigten Verschlusses wird zunächst zur Fertigung der Abdeckelemente 5 in die Formhöhlung eines ersten Formwerkzeugs eine heiße, flüssige Kunststoffmasse eingespritzt, vorzugsweise Acrylnitril-Butadien-StyrolCopolymer (ABS), Polyamid (PA) oder Polyoximethylen (POM). Nach dem Verfestigen des Kunststoffs werden die Abdeckelemente 5 aus dem ersten Formwerkzeug entnommen und zum Anformen des Kappenteils 2 in die Formhöhlung eines zweiten Formwerkzeugs eingelegt. Dabei ist die Formhöhlung dieses zweiten Formwerkzeugs um den für das Kappenteil benötigten Raum gegenüber der Formhöhlung des ersten Formwerkzeugs erweitert. In das zweite Formwerkzeug wird dann zur Formung des Kappenteils eines heiße, flüssige Kunststoffmasse eingespritzt, vorzugsweise Polyethylen (PE) oder Polypropylen (PP). Dabei wird der Rand der Abdeckelemente 5 mit der Kunststoffmasse des Kappenteils 2 umspritzt. Die Werkstoffe der Abdeckelemente und des Kappenteils 2 werden so gewählt, daß sie beim Formen des Kappenteils 2 keine materialschlüssige Verbindung miteinander eingehen. Nach dem Verfestigen der Kunststoffmasse ergibt sich dadurch lediglich eine formschlüssige Verbindung zwischen dem Kappenteil 2 und den Abdeckelementen 5.

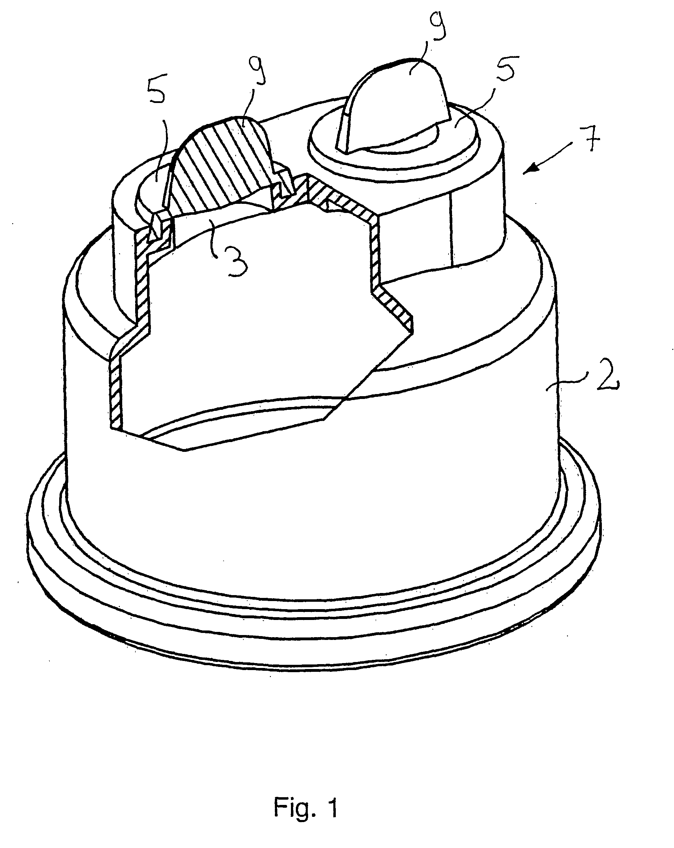

In das so mit den Abdeckelementen 5 verbundene, in Fig. 1 gezeigte Kappenteil wird dann in einem weiteren Fertigungsschritt die elastische Dichtschicht 4 eingespritzt. Dazu wird das Kappenteil 2 mit den Abdeckelementen 5 aus dem zweiten Formwerkzeug entnommen und in ein drittes Formwerkzeug eingelegt. Zur Formung der Dichtschicht 4 wird in dieses Formwerkzeug eine heiße, flüssige Kunststoffmasse eingespritzt, vorzugsweise TPE. Dabei geht der Werkstoff der Dichtschicht 4 mit dem Werkstoff des Kappenteils 2 eine materialschlüssige Verbindung ein und verschweißt mit diesem. Die Werkstoffe der Abdeckelemente 2 und der Dichtschicht 4 sind so gewählt, daß sich zwischen den Abdeckelementen 2 und der Dichtschicht 4 keine materialschlüssige Verbindung ausbildet. Dadurch sind die Abdeckelemente 5 auf einfache Weise von der Dichtschicht 4 abziehbar. Bei der Formung der Dichtschicht 4 legt sich der heiße Dichtschicht-Werkstoff, der vorzugsweise eine Temperatur von etwa 250° aufweist, an die die Öffnung 3 überdeckenden rückseitigen Oberflächenbereiche des Abdeckelements 5 an und sterilisiert diese.

Bei der Herstellung des in Fig. 4 gezeigten Verschlusses wird zunächst zur Fertigung des Kappenteils 2 in die Formhöhlung eines ersten Formwerkzeugs eines heiße, flüssige Kunststoffmasse eingespritzt, vorzugsweise PE oder PP. Nach dem Verfestigen des Kunststoffs wird das Kappenteil 2 aus dem ersten Formwerkzeug entnommen und zum Anformen der Abdeckelemente 5 in die Formhöhlung eines zweiten Formwerkzeugs eingelegt. Dabei ist die Formhöhlung dieses zweiten Formwerkzeugs um den für die Abdeckelemente 5 benötigten Raum gegenüber der Formhöhlung des ersten Formwerkzeugs erweitert. In das zweite Formwerkzeug wird dann zur Formung der Abdeckelemente 5 eine heiße, flüssige Kunststoffmasse eingespritzt, vorzugsweise ABS., PA., POM. Dabei dringt die Kunststoffmasse in die die Öffnungen 3 umgrenzenden Ringnuten des Kappenteils 2 ein und füllt diese vollständig aus. Die Werkstoffe des Kappenteils 2 und des Abdeckelements 5 werden so gewählt, daß die beim Anformen der Abdeckelemente 5 an das Kappenteil 2 keine materialschlüssige Verbindung miteinander eingehen. Nach dem Verfestigen der Kunststoffmasse ergibt sich dadurch lediglich eine formflüssige Verbindung zwischen dem Kappenteil 2 und dem Abdeckelement 5.

Das so mit den Abdeckelementen 5 verbundene Kappenteil wird aus dem zweiten Formwerkzeug entnommen und zur Formung der Dichtschicht 4 in ein drittes Formwerkzeug eingelegt. Die weiteren Fertigungsschritte entsprechen denen des Ausführungsbeispiels nach Fig. 1 bis 3.

Insgesamt ergibt sich somit ein Verschluß 1 für eine Niedikamentenflasche, der ein mit der Flasche verbindbares Kappenteil 2 aufweist, daß wenigstens eine Öffnung 3 hat, die durch eine elastische, durchstechbare Dichtschicht verschlossen ist. Die Öffnung ist kappenaußenseitig durch ein Abdeckelement abgedeckt, das mit seinem um die Öffnung umlaufenden Randbereich formschlüssig und materialschlußfrei mit dem Öffnungsrand der Kappen-Öffnung verbunden ist. Die Dichtschicht berührt die der Öffnung zugewandte Rückseite des Abdeckelements flächig, materialschlußfrei und steril.

## Patentansprüche

1. Verfahren zur Herstellung eines ein Kappenteil (2) mit wenigstens einer durch eine durchstechbare Dichtschicht (4) verschlossenen und durch ein Abdeckelement (5) abgedeckten Kappen-Öffnung (3) aufweisenden Verschlusses (1) für eine Medikamentenflasche, wobei das wenigstens eine Abdeckelement (5) und das Kappenteil (2) hergestellt und miteinander verbunden werden, und wobei danach in das Kappenteil (2) die elastische Dichtschicht (4) eingespritzt wird, **dadurch gekennzeichnet, daß** zuerst das Kappenteil (2) hergestellt wird, daß danach bei der Herstellung des wenigstens einen Abdeckelements (5) der die Kappen-Öffnung (3) umgrenzende Randbereich (6) des Kappenteils (2) mit dem Werkstoff des Abdeckelements (5) umspritzt wird, zur Bildung einer formschlüssigen Verbindung zwischen dem Abdeckelement (5) und dem Kappenteil (2), und daß die Werkstoffe des Abdeckelements (5), des Kappenteils (2) und der Dichtschicht (4) so gewählt werden, daß der Werkstoff des Abdeckelements (5) weder mit dem Werkstoff des Kappenteils (2) noch mit dem Werkstoff der Dichtschicht (4) eine materialschlüssige Verbindung eingeht.

2. Verfahren nach dem Oberbegriff von Anspruch 1, wobei zuerst das wenigstens eine Abdeckelement (5) und danach das Kappenteil (2) hergestellt wird, **dadurch gekennzeichnet, daß** zur Bildung einer formschlüssigen Verbindung zwischen dem Abdeckelement (5) und dem Kappenteil (2) bei der Herstellung des Kappenteils (2) der Randbereich (6) des Abdeckelements (5) mit dem Kappenwerkstoff umspritzt wird, und daß die Werkstoffe des Abdeckelements (5), des Kappenteils (2) und der Dichtschicht (4) so gewählt werden, daß der Werkstoff des Abdeckelements (5) weder mit dem Werkstoff des Kappenteils (2) noch mit dem Werkstoff der Dichtschicht (4) eine materialschlüssige Verbindung eingeht.

3. Verfahren nach Anspruch 1 oder 2, **dadurch gekennzeichnet, daß** die Dichtschicht (4) beim Einspritzen in das Kappenteil (2) mit diesem verschweißt wird.

4. Verschluß (1) für eine Medikamentenflasche, der ein mit der Flasche verbindbares Kappenteil (2) aufweist, das wenigstens eine Öffnung (3) hat, die durch eine elastische, durchstechbare Dichtschicht (4) verschlossen ist, und wobei die Öffnung (3) außenseitig durch ein Abdeckelement (5) abgedeckt ist, das mit dem Öffnungsrand (8) dicht und lösbar verbunden ist, **dadurch gekennzeichnet, daß** das Abdeckelement (5) mit seinem um die Öffnung (3) umlaufenden Randbereich (6) formschlüssig und materialschlußfrei mit dem Öffnungsrand (8) der Kappen-Öffnung (3) verbunden ist, und daß die Dichtschicht (4) die der Öffnung (3) zugewandte Rückseite des Abdeckelements (5) flächig, materialschlußfrei und steril berührt.

5. Verschluß (1) nach Anspruch 4, **dadurch gekennzeichnet, daß** der Öffnungsrand (8) des Kappenteils (2) eine vorzugsweise an einer umlaufenden Nut des Abdeckelements (5) gebildete Hinterschneidung des Kappenteils (2) hintergreift.

6. Verschluß (1) nach Anspruch 4, **dadurch gekennzeichnet, daß** das Abdeckelement (5) als Abdeckkappe ausgebildet ist, die mit ihrem Randbereich wenigstens eine vorzugsweise an einer um die Kappenteil-Öffnung (3) umlaufenden Nut gebildete Hinterschneidung des Kappenteils (2) hintergreift.

7. Verschluß (1) nach einem der Ansprüche 4 bis 6, **dadurch gekennzeichnet, daß** das wenigstens eine Abdeckelement (5) aus einem duroplastischen und die Dichtschicht (4) aus einem thermoplastischen Werkstoff bestehen.

8. Verschluß (1) nach einem der Ansprüche 4 bis 7, **dadurch gekennzeichnet, daß** das wenigstens eine Abdeckelement (5) und die Dichtschicht (4) aus unterschiedlichen, nicht miteinander verschweißbaren thermoplastischen Werkstoffen bestehen.

9. Verschluß (1) nach einem der Ansprüche 4 bis 8, **dadurch gekennzeichnet, daß** die Dichtschicht (4) kappeninnenseitig flächig mit dem Kappenteil (2) verschweißt ist.

10. Verschluß nach einem der Ansprüche 4 bis 9, **dadurch gekennzeichnet, daß** an das Abdeckelement (5) wenigstens eine Grifflasche (9) angeformt ist, deren Erstreckungsebene quer und insbesondere rechtwinklig zu der durch die Öffnung (3) aufgespannten Ebene angeordnet ist, vorzugsweise mittig zur Öffnung (3) des Kappenteils (2) .

## Revendications

1. Procédé de fabrication d'un bouchon (1) pour un flacon de médicaments muni d'une coiffe (2) comportant au moins un orifice (3) obturé par une couche d'étanchement (4) perforable, et recouvert par un élément de recouvrement (5), sachant que l'élément de recouvrement (5) prévu au minimum, et la coiffe (2), sont produits et reliés l'un à l'autre, et sachant que la couche élastique d'étanchement (4) est ensuite intégrée par injection dans la coiffe (2), **caractérisé par le fait que** la coiffe (2) est tout d'abord fabriquée ; **par le fait qu'**au stade successif, lors de la fabrication de l'élément de recouvrement (5) prévu au minimum, la région marginale (6) de la coiffe (2) qui délimite périphériquement l'orifice (3) de ladite coiffe est enrobée par injection à l'aide du matériau constituant l'élément de recouvrement (5), pour former une solidarisation par concordance de formes entre l'élément de recouvrement (5) et la coiffe (2) ; et **par le fait que** les matériaux de l'élément de recouvrement (5), de la coiffe (2) et de la couche d'étanchement (4) sont choisis de façon telle que le matériau de l'élément de recouvrement (5) n'entre en liaison matérielle ni avec le matériau de la coiffe (2), ni avec le matériau de la couche d'étanchement (4).

2. Procédé selon le préambule de la revendication 1, dans lequel l'élément de recouvrement (5) prévu au minimum est tout d'abord fabriqué, après quoi l'on fabrique la coiffe (2), **caractérisé par le fait que**, pour former une solidarisation par concordance de formes entre l'élément de recouvrement (5) et la coiffe (2); la région marginale (6) dudit élément de recouvrement (5) est enrobée par injection à l'aide du matériau constituant la coiffe lors de la fabrication de ladite coiffe (2) ; et **par le fait que** les matériaux de l'élément de recouvrement (5), de la coiffe (2) et de la couche d'étanchement (4) sont choisis de façon telle que le matériau de l'élément de recouvrement (5) n'entre en liaison matérielle ni avec le matériau de la coiffe (2), ni avec le matériau de la couche d'étanchement (4).

3. Procédé selon la revendication 1 ou 2, **caractérisé par le fait que** la couche d'étanchement (4) est soudée à la coiffe (2) au stade de l'intégration par injection dans cette dernière.

4. Bouchon (1) pour un flacon de médicaments, comportant une coiffe (2) qui peut être reliée audit flacon et présente au moins un orifice (3) obturé par une couche élastique d'étanchement (4) perforable, ledit orifice (3) étant recouvert, extérieurement, par un élément de recouvrement (5) relié au bord (8) de l'orifice de manière étanche et libérable, **caractérisé par le fait que** l'élément de recouvrement (5) est relié par concordance de formes et sans liaison matérielle, par sa région marginale (6) ceinturant périphériquement l'orifice (3), au bord (8) dudit orifice (3) de la coiffe ; et **par le fait que** la couche d'étanchement (4) est en contact à plat, stérile, et exempt de liaison matérielle, avec la face postérieure de l'élément de recouvrement (5) qui est tournée vers l'orifice (3).

5. Bouchon (1) selon la revendication 4, **caractérisé par le fait que** le bord (8) de l'orifice de la coiffe (2) emprisonne, par-derrière, une contre-dépouille de ladite coiffe (2) qui est façonnée, de préférence, sur une rainure périphérique de l'élément de recouvrement (5).

6. Bouchon (1) selon la revendication 4, **caractérisé par le fait que** l'élément de recouvrement (5) est réalisé sous la forme d'un capuchon de recouvrement emprisonnant par-derrière, par sa région marginale, au moins une contre-dépouille de la coiffe (2) qui est façonnée, de préférence, sur une rainure ceinturant périphériquement l'orifice (3) de ladite coiffe.

7. Bouchon (1) selon l'une des revendications 4 à 6; **caractérisé par le fait que** l'élément de recouvrement (5) prévu au minimum consiste en une matière thermodurcissable, et la couche d'étanchement (4) consiste en une matière thermoplastique.

8. Bouchon (1) selon l'une des revendications 4 à 7, **caractérisé par le fait que** l'élément de recouvrement (5) prévu au minimum, et la couche d'étanchement (4), consistent en des matériaux thermoplastiques différents inaptes à la solidarisation par soudage

9. Bouchon (1) selon l'une des revendications 4 à 8, **caractérisé par le fait que** la couche d'étanchement (4) est soudée à plat sur la coiffe (2), à la face intérieure de ladite coiffe.

10. Bouchon selon l'une des revendications 4 à 9, **caractérisé par le fait qu'**au moins une oreille de préhension (9) est venue de moulage solidaire avec l'élément de recouvrement (5), le plan de l'étendue de ladite oreille étant agencé transversalement et, en particulier, perpendiculairement au plan défini par l'orifice (3), de préférence centralement vis-à-vis de l'orifice (3) de la coiffe (2).

## Claims

1. Process for producing a closure (1) for a medicine bottle having a cap portion (2) with at least one cap opening (3) sealed off by a perforatable sealing layer (4) and covered by a cover element (5), wherein the minimum of one cover element (5) and the cap portion (2) are produced and joined together, and then the elastic sealing layer (4) is injected into the cap portion (2), **characterised in that** first the cap portion (2) is produced, then during the manufacture of the or each cover element (5) the material of the cover element (5) is injected round the edge region (6) of the cap portion (2) surrounding the cap opening (3), to form an interlockingly engaging connection between the cover element (5) and the cap portion (2), and **in that** the materials of the cover element (5), cap portion (2) and sealing layer (4) are selected so that the material of the cover element (5) does not enter into a materially integrated bond either with the material of the cap portion (2) or with the material of the sealing layer (4).

2. Process according to the precharacterising clause of claim 1, wherein first the or each cover element (5) and then the cap portion (2) is produced, **characterised in that** in order to form an interlockingly engaging connection between the cover element (5) and the cap portion (2) the cap material is injected round the edge region (6) of the cover element during the production of the cap portion (2), and **in that** the materials of the cover element (5), cap portion (2) and sealing layer (4) are selected so that the material of the cover-element (5) does not enter into a materially integrated bond either with the material of the cap portion (2) or with the material of the sealing layer (4).

3. Process according to claim 1 or 2, **characterised in that** on being injected into the cap portion (2) the sealing layer (4) becomes welded thereto.

4. Closure (1) for a medicine bottle which has a cap portion connectable to the bottle (2), which has at least one opening (3) closed off by an elastic, perforatable sealing layer (4), the opening (3) being covered on the outside by a cover element (5) which is tightly and releasably connected to the rim of the opening (8), **characterised in that** the cover element (5) is interlockingly connected, with no material bonding, by its edge region (6) encircling the opening (3), to the rim of the opening (8) of the cap opening (3), and **in that** the sealing layer (4) makes flat, sterile contact, free from any material bond, with the reverse side of the cover element (5) facing the opening (3).

5. Closure (1) according to claim 4, **characterised in that** the rim of the opening (8) of the cap portion (2) engages behind an undercut in the cap portion (2) which is preferably formed on an encircling groove of the cover element (5).

6. Closure (1) according to claim 4, **characterised in that** the cover element (5) is constructed as a cover cap which engages with its edge region behind at least one undercut in the cap portion (2) which is preferably formed on a groove surrounding the cap portion opening (3).

7. Closure (1) according to one of claims 4 to 6, **characterised in that** the or each cover element (5) consists of a duroplastic material and the sealing layer (4) consists of a thermoplastic material.

8. Closure (1) according to one of claims 4 to 7, **characterised in that** the or each cover element (5) and the sealing layer (4) consist of different thermoplastic materials which cannot be welded together.

9. Closure (1) according to one of claims 4 to 8, **characterised in that** the sealing layer (4) is welded flat to the cap portion (2) on the inside of the cap.

10. Closure according to one of claims 4 to 9, **characterised in that** at least one gripping tab (9) is formed on the cover element (5), the plane of which extends transversely and particularly at right angles to the plane spanned by the opening (3), preferably centrally with respect to the opening (3) of the cap portion (2).
